# EUROPÄISCHE PATENTSCHRIFT

(11) **EP 1 196 460 B1**
(45) Veröffentlichungstag und Bekanntmachung des Hinweises auf die Patenterteilung: **18.02.2004**
(21) Anmeldenummer: 00931280.2
(22) Anmeldetag: 02.06.2000
(51) Int. Cl.: C08F 10/00, C08F 2/01, B01F 5/06, B01J 19/24

(54) **VERFAHREN ZUR HERSTELLUNG VON ETHYLENHOMO- UND -COPOLYMEREN DURCH INTENSIVES VERMISCHEN EINER REAKTIVEN REAKTIONSKOMPONENTE MIT EINEM STRÖMENDEN FLIESSMEDIUM**
METHOD FOR PRODUCING ETHYLENE HOMO- AND COPOLYMERS BY INTENSIVELY MIXING A REACTIVE REACTION COMPONENT WITH A MOBILE FLOW MEDIUM
PROCEDE DE PREPARATION D'HOMOPOLYMERES ET DE COPOLYMERES ETHYLIQUES PAR MELANGE INTENSE D'UN CONSTITUANT DE REACTION REACTIF AVEC UNE SUBSTANCE LIQUIDE EN ECOULEMENT

(30) Priorität: 10.06.1999 DE 19926223
(43) Veröffentlichungstag der Anmeldung: 17.04.2002
(73) Patentinhaber: Basell Polyolefine GmbH, 50389 Wesseling (DE)
(72) Erfinder: MÄHLING, Frank-Olaf, D-68167 Mannheim (DE); DAISS, Andreas, D-68165 Mannheim (DE); GROOS, Georg, D-67125 Dannstadt-Schauernheim (DE); WÖLFERT, Andreas, D-74613 Öhringen (DE)
(86) Internationale Anmeldenummer: PCT/EP2000/005047
(87) Internationale Veröffentlichungsnummer: WO 2000/077055

(56) Entgegenhaltungen:
- WO-A-96/35506
- US-A- 3 721 126
- US-A- 5 397 179

## Beschreibung

Die vorliegende Erfindung betrifft ein Verfahren zur Herstellung von Ethylenhomo- und -copolymeren in einem Rohrreaktor bei Drücken oberhalb von 1000 bar und Temperaturen im Bereich von 120 bis 350 °C durch radikalische Polymerisation, bei dem einem strömenden Fließmedium enthaltend Ethylen, Molmassenregler und ggf. Polyethylen zunächst geringe Mengen von Radikalkettenstarter zugeleitet werden, wonach dann die Polymerisation erfolgt.

Das Hochdruckpolymerisationsverfahren ist ein bewährtes Verfahren zur Herstellung von Polyethylen mit niedriger Dichte (LDPE), das weltweit in zahlreichen Anlagen großtechnisch mit großem Erfolg durchgeführt wird. Der Start der Polymerisation wird bei der Hochdruckpolymerisation üblicherweise durch Luftsauerstoff, durch Peroxide, durch andere Radikalbildner oder durch Gemische aus diesen bewirkt. In der Praxis hat es sich als besonders vorteilhaft herausgestellt, die Polymerisationsreaktion an mehreren Stellen innerhalb des Reaktors "gleichzeitig" zu starten und damit die Reaktorausbeute hoch und die Produktqualität auf einem gleichmäßig hohen Niveau zu halten. Die zum Start der Polymerisation eingesetzten Radikalkettenstarter müssen hierzu dem Reaktionsmedium in geeigneter Weise zugesetzt werden.

Die Effektivität eines ausgewählten Radikalkettenstarters hängt davon ab, wie schnell er im Einzelfall mit dem vorgelegten Reaktionsmedium vermischt wird. Hierzu kommen in großtechnischen Anlagen bei der Herstellung von Hochdruckpolyethylen sogenannte Einspritzfinger zum Einsatz. Die EP-A-0 449 092 beschreibt, wie über Einspritzfinger Radikalkettenstarter, nachfolgend auch Initiatoren genannt, Initiatorgemische oder Lösungen von Initiatoren in organischen Lösemitteln an mehreren Stellen entlang eines Reaktors eindosiert werden.

Eine Verbesserung der Vermischung des eindosierten Initiators und damit verbunden eine Verbesserung der Produktqualität konnte auch durch eine Erhöhung der Strömungsgeschwindigkeit in den Mischzonen erreicht werden. Die US-PSen 4,135,044 und 4,175,169 beschreiben, wie durch vergleichsweise geringeren Rohrdurchmesser in den Initiierungs- und Reaktionszonen eines Hochdruckreaktors, bezogen auf den vergrößerten Rohrdurchmesser in der Kühlzone, Produkte mit sehr guten optischen Eigenschaften in hohen Ausbeuten und bei relativ geringem Druckabfall über die Länge des Reaktors hergestellt werden konnten.

Schließlich beschreibt die US-PS 3,405,115 die besondere Bedeutung eines gleichmäßigen Startens der Polymerisationsreaktion und der optimalen Durchmischung der Reaktionskomponenten für die Qualität des Polyethylens, für hohe Reaktorausbeute und zur Einstellung eines gleichmäßigen Reaktorbetriebes. Hierzu werden Initiatoren in einer speziellen Mischkammer mit Teilströmen von kaltem Ethylen vermischt und danach erst dem eigentlichen Reaktor zugeleitet. In der Mischkammer wird das Fluid, in dem der Initiator wegen der dort herrschenden niedrigen Temperatur nicht zerfällt, mehrfach umgelenkt und durch Kanäle geführt.

Allen bekannten Verfahren und Vorrichtungen zur Zuleitung von Radikalkettenstartern zu der Reaktionsmischung ist gemeinsam, dass die Geschwindigkeit und die Intensität des Mischvorganges noch verbesserungswürdig ist.

Aufgabe der vorliegenden Erfindung war es daher, ein Verfahren anzugeben, nach dem die Hochdruckpolymerisation von Ethylen in Rohrreaktoren insofern mit verbesserter Reaktorausbeute, bezogen auf die zugesetzte Menge an Radikalkettenstarter, und mit verbesserter Produktqualität des hergestellten Polyethylens durchgeführt werden kann, als die Geschwindigkeit und Intensität der Durchmischung des Radikalkettenstarters mit dem strömenden Fließmedium im Moment der Zuleitung noch weiter vergrößert und intensiviert wird.

Gelöst wird diese Aufgabe durch ein Verfahren der eingangs genannten Gattung, dessen Kennzeichenmerkmale darin zu sehen sind, dass das strömende Fließmedium zunächst in zwei getrennt voneinander strömende Volumenelemente zerlegt wird, dass dann die getrennt voneinander strömenden Volumenelemente durch geeignete Strömungselemente in gegensinnige Rotation versetzt werden, dass dann die gegensinnig rotierenden, strömenden Volumenelemente wieder zu einem strömenden Fließmedium vereinigt werden und dass im Moment oder kurz nach der Vereinigung der gegensinnig rotierenden, strömenden Volumenelemente der Radikalkettenstarter in den gescherten Grenzbereich zwischen den gegensinnig rotierenden, strömenden Volumenelementen zugeleitet wird.

In einer erfindungsgemäß bevorzugten Ausführungsform des Verfahrens wird die Zerlegung des strömenden Fließmediums so vorgenommen, dass eine Kernströmung und wandnah strömende Volumenelemente entstehen.

Als Molmassenregler können erfindungsgemäß gängige polare oder unpolare organische Verbindungen wie Ketone, Aldehyde, Alkane oder Alkene mit 3 bis 20 C-Atomen eingesetzt werden. Bevorzugte Molmassenregler sind Aceton, Methylethylketon, Propionaldehyd, Propan, Propen, Butan, Buten oder Hexen.

Als Radikalkettenstarter können erfindungsgemäß Peroxide wie aliphatische Diacyl(C₃ bis C₁₂)peroxide, Dialkyl(C₃ bis C₁₂)peroxide oder Peroxyester, tertiär-Butylperoxypivalat (TBPP), tertiär-Butylperoxy-3,5,5-trimethylhexanoat (TBPIN), Di-tertiärbutylperoxid (DTBP) oder Gemische oder Lösungen von diesen in geeigneten Lösemitteln verwendet werden. Die Radikalkettenstarter werden erfindungsgemäß in Mengen im Bereich von 10 bis 1000 g/t erzeugtes PE, vorzugsweise von 100 bis 600 g/t erzeugtes PE, zugeleitet.

Das strömende Fließmedium, zu dem die vorstehend genannten Radikalkettenstarter erfindungsgemäß zugeleitet werden, kann neben Ethylen als Comonomer zusätzlich 1-Olefine mit 3 bis 20 C-Atomen, vorzugsweise mit 3 bis 10 C-Atomen, in einer Menge im Bereich von 0 bis 10 Gew.-%, bezogen auf die Menge an Ethylenmonomer, enthalten, vorzugsweise in einer Menge im Bereich von 1 bis 5 Gew.-%. Zusätzlich kann das strömende Fließmedium erfindungsgemäß Polyethylen in einer Menge im Bereich von 0 bis 40 Gew.-%, bezogen auf das Gesamtgewicht der Monomere, enthalten, vorzugsweise von 0 bis 30 Gew.-%.

In einer besonders bevorzugten Variante des erfindungsgemäßen Verfahrens wird die Zuleitung der Radikalkettenstarter in einem Bereich des Rohrreaktors vorgenommen, in dem durch eine Reduzierung des Durchmessers des Rohrreaktors auf einen Wert von etwa dem 0,6- bis 0,9-fachen des Durchmessers D des Reaktors in der Zulaufzone die Strömungsgeschwindigkeit des strömenden Fließmediums auf das 1,2- bis 2,8-fache, vorzugsweise auf das 1,8- bis 2,5-fache, der Strömungsgeschwindigkeit innerhalb der Zulaufzone des Rohrreaktors erhöht ist. In Absolutzahlen ausgedrückt liegt die Strömungsgeschwindigkeit des strömenden Fließmediums im Zuleitungsbereich der Radikalkettenstarter erfindungsgemäß im Bereich von 10 bis 40 m/s, vorzugsweise von 15 bis 30 m/s, besonders bevorzugt von 20 bis 25 m/s.

Das erfindungsgemäße Verfahren ermöglicht es, die Menge an zugegebenem Radikalkettenstarter bei gleicher Menge an produziertem LDPE deutlich zu reduzieren, und damit die Hochdruckpolymerisation wirtschaftlicher zu betreiben.

Ferner besitzt das nach dem erfindungsgemäßen Verfahren hergestellte LDPE verbesserte optische Eigenschaften auf Grund geringerer hochmolekularer Anteile mit einer Molmasse von mehr als 10⁶ g pro mol.

Außerdem hat das erfindungsgemäße Verfahren noch den Vorteil, dass ein stabiler Reaktorbetrieb bei ungewöhnlich hohen Maximaltemperaturen von bis zu 350 °C aufrecht erhalten werden kann, ohne dass eine Zersetzungsneigung auftritt.

Ein weiterer Vorteil des erfindungsgemäßen Verfahrens ist darin zu sehen, dass der Start der Polymerisation bei tieferen Temperaturen einsetzt und dass danach der Temperaturanstieg der Reaktionsmischung kontrollierter erfolgt. Dadurch wird die Lebensdauer der Radikalkettenstarter, die gewöhnlich nur eine relativ kurze Halbwertszeit haben, besser für die Polymerisation und damit für die Herstellung von LDPE ausgenutzt.

Gegenstand der Erfindung ist auch eine Vorrichtung zur Durchführung des Verfahrens, umfassend ein Rohrreaktorteilstück mit einem Innendurchmesser D und einer Länge im Bereich von 30 bis 50·D, vorzugsweise 35 bis 45·D, und ein oder mehrere Zuleitungsdüsen für den Radikalkettenstarter, deren Kennzeichenmerkmale darin zu sehen sind, dass im Innenraum des Rohrreaktors über eine Länge im Bereich von 2 bis 6·D Trennelemente zur Auftrennung des strömenden Fließmediums in getrennt voneinander strömende Volumenelemente angeordnet sind, dass im Bereich der Trennelemente zusätzlich wenigstens ein Strömungselement angeordnet ist, das ein daran entlang strömendes Fließmedium in Rotation zu versetzen vermag, und dass in Strömungsrichtung gesehen hinter den Trennelementen und den Strömungselementen ein oder mehrere Zuleitungsdüsen für den Radikalkettenstarter angeordnet sind.

Das Trennelement zur Auftrennung des strömenden Fließmediums ist in einer bevorzugten Ausführungsform der erfindungsgemäßen Vorrichtung ein Innenrohr mit einem Durchmesser im Bereich von 0,5 bis 0,7·D, mit dem das strömende Fließmedium in eine Kernströmung im Inneren des Innenrohrs und eine Mantelströmung außerhalb des Innenrohrs, aber innerhalb des Rohrreaktors aufgetrennt wird.

Bevorzugt sind innerhalb des Innenrohres und außerhalb des Innenrohrs Strömungselemente angeordnet, die in ihrer geometrischen Ausbildung in Längsrichtung gesehen um einen Winkel von ± ∝ verdrehte Bleche darstellen, wobei die Verdrehung der Strömungselemente innerhalb des Innenrohrs und außerhalb des Innenrohrs gegensinnig ist. Die maximale Länge der Strömungselemente entspricht der Länge des Innenrohrs, die Strömungselemente können aber auch kleiner dimensioniert sein, wobei der Winkel ∝, um den die Bleche verdreht sind, wenigstens 90° betragen sollte, aber zur Erhöhung der Rotation des strömenden Volumenelementes ebenso gut auch größer gewählt werden kann.

Die Zuleitungsdüsen, von denen erfindungsgemäß wenigstens eine, vorzugsweise aber mehrere in Strömungsrichtung gesehen am Ende des Innenrohrs angeordnet sind, besitzen Austrittsbohrungen von maximal 1 mm, vorzugsweise von maximal 0,7 mm, besonders bevorzugt von maximal 0,5 mm. Der Abstand der Zuleitungsdüsen zum Ende des Innenrohrs soll maximal 1·D, vorzugsweise maximal 0,5·D, betragen.

Vorzugsweise befindet sich in Strömungsrichtung gesehen vor den Trennelementen zur Auftrennung des strömenden Fließmediums in getrennt voneinander strömende Volumenelemente oder nach der oder den Zuleitungsdüsen ein konisches Übergangsstück, im Bereich dessen der Innendurchmesser des Rohrreaktors von D auf etwa 0,9 bis 0,6·D reduziert wird. Das konische Übergangsstück befindet sich in einem Abstand von maximal 1·D, vorzugsweise von maximal 0,5·D, von der oder den Zuleitungsdüsen oder von den Trennelementen und besitzt eine Länge im Bereich von 3 bis 7·D, vorzugsweise im Bereich von 4 bis 6·D.

Im Verlauf des konischen Übergangsstückes erhöht sich die Strömungsgeschwindigkeit des strömenden Fließmediums auf etwa das 1,2- bis 2,8-fache, vorzugsweise auf das 1,8- bis 2,5-fache, der Strömungsgeschwindigkeit innerhalb der Zulaufzone des Rohrreaktors.

Wenn das konische Übergangsstück, in Strömungsrichtung gesehen, nach der oder den Zuleitungsdüsen angeordnet ist, schließt sich nach dem konischen Übergangsstück, in Strömungsrichtung gesehen, das eigentliche Reaktionsrohr an, das eine Länge im Bereich von 15 bis 30·D, vorzugsweise von 20 bis 27·D, besitzt und einen Innendurchmesser, der dem Innendurchmesser des konischen Endteils des konischen Übergangsstückes entspricht.

Im Verlauf des Reaktionsrohres wird daher die hohe Strömungsgeschwindigkeit aufrechterhalten, wodurch gewährleistet ist, dass die Vermischung der Reaktionskomponenten und der Radikalkettenstarter innerhalb des strömenden Fließmediums nahezu vollständig ist. Nach dem Durchlaufen des Reaktionsrohrs mit hoher Strömungsgeschwindigkeit kann deshalb die Strömungsgeschwindigkeit des strömenden Fließmediums wieder abgesenkt werden, was in einem zweiten konischen Übergangsstück mit einer Länge, die im wesentlichen der Länge des ersten konischen Übergangsstück entspricht, geschehen kann.

Wenn das konische Übergangsstück vor den Trennelementen zur Auftrennung des strömenden Fließmediums in getrennt voneinander strömende Volumenelemente angeordnet ist, findet die erfindungsgemäße Zugabe von Radikalkettenstarter im vorderen Teil des Reaktionsrohres selbst statt, in dem bereits eine erhöhte Strömungsgeschwindigkeit herrscht. Obwohl der reduzierte Innendurchmesser des Reaktionsrohres auf 0,9 bis 0,6 D eine Verkleinerung der Geometrie der Trennelemente und ebenso der Strömungselemente notwendig macht, kann diese Anordnung, bedingt durch die höhere Strömungsgeschwindigkeit, doch in manchen Fällen Vorteile bei der Zudosierung von Radikalkettenstarter und dem Start der Polymerisationsreaktion haben.

Die Längen und Durchmesser der einzelnen Teile der erfindungsgemäßen Vorrichtung können in weiten Bereichen variiert werden, wodurch die Mischgüte wie auch der Druckabfall innerhalb der Reaktionsmischung beeinflusst wird. Ferner können verschieden ausgestaltete Zuleitungsdüsen, Einspritzfinger oder Einspritzdüsen mit der erfindungsgemäßen Vorrichtung kombiniert werden. Die Strömungsgeschwindigkeit des strömenden Fließmediums kann durch Variation des Massenflusses Werte im Bereich zwischen 10 m/s bis 40 m/s annehmen, vorzugsweise zwischen 15 m/s und 30 m/s, besonders bevorzugt zwischen 20 m/s und 25 m/s.

Die Erfindung soll nachfolgend durch eine Zeichnung für den Fachmann noch deutlicher dargestellt werden, ohne auf die in der Darstellung illustrierte Ausführungsform beschränkt zu sein.

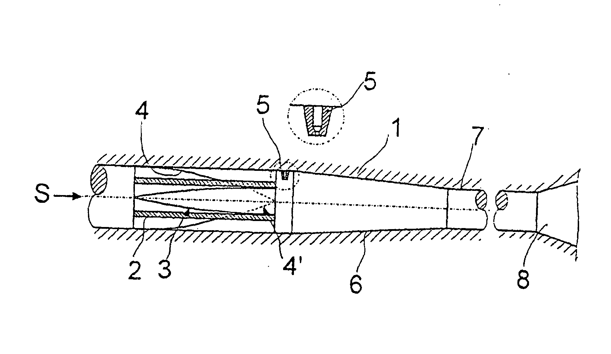

**FIG. 1** zeigt einen senkrechten Schnitt durch eine erfindungsgemäße Vorrichtung in seitlicher Ansicht.

Mit Bezugszeichen ist der Rohrreaktor 1 dargestellt, der einen Durchmesser D im Bereich von 20 bis 100 mm besitzt. In der Zulaufzone des Rohrreaktors 1 ist ein Innenrohr 2 angeordnet, das in der dargestellten Vorrichtung einen Durchmesser von 0,6·D und eine Länge von 4·D besitzt. Innerhalb des Innenrohrs 2 ist ein Strömungselement 3 angeordnet, das die Form eines um einen Winkel von + 90° verdrehten Bleches besitzt. Außerhalb des Innenrohrs 2, aber noch innerhalb des Rohrreaktors 1 sind weitere Strömungselemente 4,4' angeordnet, die jeweils die Form von um einen Winkel von - 90° verdrehten Blechen besitzen. Im Abstand von 0,5·D vom Ende des Innenrohrs 2 ist eine Zuleitungsdüse 5 angeordnet, mit deren Hilfe der Radikalkettenstarter in den gescherten Grenzbereich der gegensinnig rotierenden strömenden Volumenelemente zugeleitet wird. Die Zuleitungsdüse 5 besitzt eine Austrittsbohrung mit einem Durchmesser von 0,5 mm, was in der Auschnittsvergrößerung gezeigt ist. Im Abstand 0,5·D von der Zuleitungsdüse 5 schließt sich in Strömungsrichtung S das konische Übergangsteil 6 an, mit dem der Innendurchmesser des Rohrreaktors auf einen Wert von 0,72·D reduziert wird. Das konische Übergangsstück weist in der Darstellung der Fig. 1 eine Länge von 5·D auf. Nach dem konischen Übergangsstück 6 schließt sich in Strömungsrichtung S die Reaktionszone 7 an, die eine nicht mehr ganz dargestellte Länge von 25·D besitzt und an die sich das ebenfalls nicht mehr ganz dargestellte zweite konische Übergangsstück 8 anschließt, mit dem der Innendurchmesser des Rohrreaktors 1 wieder auf einen Wert von D erweitert wird.

Nachdem nun die Erfindung durch die Zeichnung in vielen Einzelheiten erläutert wurde, sollen nachfolgend die technischen Vorteile der Erfindung anhand von Ausführungsbeispielen für den Fachmann noch deutlicher herausgestellt werden.

### Beispiel 1 (Vergleichsbeispiel)

In einem Rohrreaktor mit einem Innendurchmesser D von 39 mm wurde die Polymeristaion von Ethylen bei einem Durchsatz von 30 t/h unter einem Druck von 2900 bar durchgeführt. Als Radikalkettenstarter wurde eine Mischung von TBPP, TBPIN und DTBP eingesetzt. Als Molmassenregler wurde Propionaldehyd in einer Menge von 0,048 Gew.-%, bezogen auf das Gesamtgewicht an Ethylen, eingesetzt. Die Menge an eingesetzten Radikalkettenstartern und die Ergebnisse der Polymerisation sind der am Ende der Ausführungsbeispiele aufgeführten Tabelle zu entnehmen.

### Beispiele 2 und 3 (erfindungsgemäß)

Unter gleichen Bedingungen wie in Beispiel 1 wurde die Polymerisation von Ethylen unter Einsatz einer in Fig. 1 dargestellten Mischvorrichtung durchgeführt. Die Menge an eingesetzten Radikalkettenstartern und die Ergebnisse der Polymerisation sind der am Ende der Ausführungsbeispiele aufgeführten Tabelle zu entnehmen.

### Beispiel 4 (Vergleichsbeispiel)

In einem Rohrreaktor mit einem Innendurchmesser D von 39 mm wurde die Polymeristaion von Ethylen bei einem Durchsatz von 30 t/h unter einem Druck von 3000 bar durchgeführt. Als Radikalkettenstarter wurde wieder eine Mischung von TBPP, TBPIN und DTBP eingesetzt. Als Molmassenregler wurde Propionaldehyd in einer Menge von 0,039 Gew.-%, bezogen auf das Gesamtgewicht an Ethylen, eingesetzt. Die Menge der eingesetzten Radikalkettenstarter und die Ergebnisse der Polymerisation sind der am Ende der Ausführungsbeispiele aufgeführten Tabelle zu entnehmen.

### Beispiele 5 und 6 (erfindungsgemäß)

Unter gleichen Bedingungen wie in Beispiel 4 wurde die Polymerisation von Ethylen unter Einsatz einer in Fig. 1 dargestellten Mischvorrichtung durchgeführt. Die Menge an eingesetzten Radikalkettenstartern und die Ergebnisse der Polymerisation sind der nachfolgend aufgeführten Tabelle zu entnehmen.

### Versuchsparameter und -ergebnisse

| Vers. -Nr. | TBPP-Verbrauch [g/t PE] | TBPIN-Verbrauch [g/t PE] | DTBP-Verbrauch [g/t PE] | Streuwert [%] | Haze [%] | Dichte [kg/m³] | [MFI [dg/10 min] | Umsatz [%] |
|---|---|---|---|---|---|---|---|---|
| 1 | 111 | 157 | 162 | 21,0 | 8,1 | 923,2 | 0,83 | 27,3 |
| 2 | 95 | 148 | 152 | 18,3 | 7,2 | 923,7 | 0,81 | 27,9 |
| 3 | 92 | 140 | 144 | 17,2 | 7,4 | 923,6 | 0,89 | 27,5 |
| | | | | | | | | |
| 4 | 275 | 316 | 22 | 14,1 | 7,2 | 926,8 | 0,29 | 24,1 |
| 5 | 220 | 302 | 21 | 11,0 | 5,6 | 927,2 | 0,31 | 24,0 |
| 6 | 211 | 345 | 24 | 11,2 | 6,0 | 926,8 | 0,27 | 24,5 |

Die in der vorstehenden Tabelle aufgeführten Produktparameter wurden nach folgenden Meßmethoden ermittelt:
Streuwert: Keine Norm.
Haze: Nach ASTM D 1003.
Dichte: Nach ISO 1183.
MFI: Als MFI_{(190/2.16)} [dg/min] nach DIN 53735
Umsatz: Produktion [t/h]/Ethylendurchsatz [t/h]

Aus den Beispielen wird deutlich, dass durch das erfindungsgemäße Verfahren der Umsatz und vor allem die Produkteigenschaften signifikant verbessert werden. Die einzusetzende Menge an Radikalkettenstarter konnte erfindungsgemäß um ca. 20 % gesenkt werden und die Betriebskonstanz des Rohrreaktors wurde erhöht.

## Patentansprüche

1. Verfahren zur Herstellung von Ethylenhomo- und - copolymeren in einem Rohrreaktor bei Drücken oberhalb von 1000 bar und Temperaturen im Bereich von 120 bis 350 °C durch radikalische Polymerisation, bei dem einem strömenden Fließmedium enthaltend Ethylen, Molmassenregler und ggf. Polyethylen zunächst geringe Mengen von Radikalkettenstarter zugeleitet werden, wonach dann die Polymerisation erfolgt, **dadurch gekennzeichnet, dass** das strömende Fließmedium zunächst in zwei getrennt voneinander strömende Volumenelemente zerlegt wird, dass dann die getrennt voneinander strömenden Volumenelemente durch geeignete Strömungselemente in gegensinnige Rotation versetzt werden, dass dann die gegensinnig rotierenden, strömenden Volumenelemente wieder zu einem strömenden Fließmedium vereinigt werden und dass im Moment oder kurz nach der Vereinigung der gegensinnig rotierenden, strömenden Volumenelemente der Radikalkettenstarter in den gescherten Grenzbereich zwischen den gegensinnig rotierenden, strömenden Volumenelementen zugeleitet wird.

2. Verfahren nach Anspruch 1, **dadurch gekennzeichnet, dass** die Zerlegung des strömenden Fließmediums so vorgenommen wird, dass eine Kernströmung und eine Mantelströmung entstehen.

3. Verfahren nach Anspruch 1 oder 2, **dadurch gekennzeichnet, dass** als Molmassenregler polare oder unpolare organische Verbindungen wie Ketone, Aldehyde, Alkane oder Alkene mit 3 bis 20 C-Atomen eingesetzt werden, vorzugsweise Aceton, Methylethylketon, Propionaldehyd, Propan, Propen, Butan, Buten oder Hexen.

4. Verfahren nach einem der Ansprüche 1 bis 3, **dadurch gekennzeichnet, dass** als Radikalkettenstarter Peroxide wie tertiär-Butylperoxypivalat (TBPP), tertiär-Butylperoxy-3,5,5-trimethylhexanoat (TBPIN), Di-tertiärbutylperoxid (DTBP) oder Gemische oder Lösungen von diesen in geeigneten Lösemitteln in Mengen im Bereich von 10 bis 1000 g/t erzeugtes PE, vorzugsweise von 100 bis 600 g/t PE, zugeleitet werden.

5. Verfahren nach einem der Ansprüche 1 bis 4, **dadurch gekennzeichnet, dass** das strömende Fließmedium, zu dem die Radikalkettenstarter zugeleitet werden, neben Ethylen als Comonomer zusätzlich 1-Olefine mit 3 bis 20 C-Atomen, vorzugsweise mit 4 bis 10 C-Atomen, in einer Menge im Bereich von 0 bis 10 Gew.-%, bezogen auf die Menge an Ethylenmonomer, enthält, vorzugsweise in einer Menge im Bereich von 1 bis 5 Gew.-%.

6. Verfahren nach einem der Ansprüche 1 bis 5, **dadurch gekennzeichnet, dass** das strömende Fließmedium zusätzlich Polyethylen in einer Menge im Bereich von 0 bis 40 Gew.-%, bezogen auf das Gesamtgewicht der Monomere, enthält, vorzugsweise in einer Menge von 0 bis 30 Gew.-%.

7. Verfahren nach einem der Ansprüche 1 bis 6, **dadurch gekennzeichnet, dass** die Zuleitung der Radikalkettenstarter in einem Bereich des Rohrreaktors vorgenommen wird, in dem durch eine Reduzierung des Durchmessers des Rohrreaktors auf einen Wert von etwa dem 0,6- bis 0,9-fachen des Durchmessers D des Reaktors in der Zulaufzone die Strömungsgeschwindigkeit des strömenden Fließmediums auf das 1,2- bis 2,8-fache, vorzugsweise auf das 1,8- bis 2,5-fache, der Strömungsgeschwindigkeit innerhalb der Zulaufzone des Rohrreaktors erhöht ist.

8. Vorrichtung zur Durchführung des Verfahrens nach einem der Ansprüche 1 bis 7, umfassend ein Rohrreaktorteilstück mit einem Innendurchmesser D und einer Länge im Bereich von 30 bis 50·D, vorzugsweise 35 bis 45·D, und ein oder mehrere Zuleitungsdüsen für den Radikalkettenstarter, **dadurch gekennzeichnet, dass** im Innenraum des Rohrreaktors über eine Länge im Bereich von 2 bis 6·D Trennelemente zur Auftrennung des strömenden Fließmediums in getrennt voneinander strömende Volumenelemente angeordnet sind, dass im Bereich der Trennelemente zusätzlich wenigstens ein Strömungselement angeordnet ist, das ein daran entlang strömendes Fließmedium in Rotation versetzt, und dass in Strömungsrichtung gesehen hinter den Trennelementen und den Strömungselementen ein oder mehrere Zuleitungsdüsen für den Radikalkettenstarter angeordnet sind.

9. Vorrichtung nach Anspruch 8, **dadurch gekennzeichnet, dass** das Trennelement zur Auftrennung des strömenden Fließmediums ein Innenrohr mit einem Durchmesser im Bereich von 0,5 bis 0,7·D ist, mit dem das strömende Fließmedium in eine Kernströmung im Inneren des Innenrohrs und in eine Mantelströmung außerhalb des Innenrohrs, aber innerhalb des Rohrreaktors aufgetrennt wird.

10. Vorrichtung nach Anspruch 8 oder 9, **dadurch gekennzeichnet, dass** innerhalb des Innenrohres und außerhalb des Innenrohrs Strömungselemente angeordnet sind, die in ihrer geometrischen Ausbildung in Längsrichtung gesehen um einen Winkel von ± ∝ verdrehte Bleche darstellen, wobei die Verdrehung der Strömungselemente innerhalb des Innenrohrs und außerhalb des Innenrohrs gegensinnig ist.

11. Vorrichtung nach einem der Ansprüche 8 bis 10, **dadurch gekennzeichnet, dass** die maximale Länge der Strömungselemente der Länge des Innenrohrs entspricht, und dass der Winkel ∝, um den die Bleche verdreht sind, wenigstens 90° beträgt.

12. Vorrichtung nach einem der Ansprüche 8 bis 11, **dadurch gekennzeichnet, dass** die Zuleitungsdüsen, von denen wenigstens eine, vorzugsweise aber mehrere, in Strömungsrichtung gesehen am Ende des Innenrohrs angeordnet sind, Austrittsbohrungen von maximal 1 mm, vorzugsweise von maximal 0,7 mm, besonders bevorzugt von maximal 0,5 mm, besitzen.

13. Vorrichtung nach einem der Ansprüche 8 bis 12, **dadurch gekennzeichnet, dass** in Strömungsrichtung gesehen vor den Trennelementen zur Auftrennung des strömenden Fließmediums in getrennt voneinander strömende Volumenelemente oder nach der oder den Zuleitungsdüsen ein konisches Übergangsstück angeordnet ist, im Bereich dessen der Innendurchmesser des Rohrreaktors von D auf etwa 0,9 bis 0,6·D reduziert wird, und dass das konische Übergangsstück in einem Abstand von maximal 1·D, vorzugsweise von maximal 0,5·D, von den Trennelementen oder der oder den Zuleitungsdüsen angeordnet ist und eine Länge im Bereich von 3 bis 7·D, vorzugsweise im Bereich von 4 bis 6·D, besitzt.

14. Vorrichtung nach einem der Ansprüche 8 bis 13, **dadurch gekennzeichnet, dass** nach dem konischen Übergangsstück, in Strömungsrichtung gesehen, das Reaktionsrohr angeordnet ist, das eine Länge im Bereich von 15 bis 30·D, vorzugsweise von 20 bis 27·D, besitzt und einen Innendurchmesser besitzt, der dem Innendurchmesser des konischen Endteils des konischen Übergangsstückes entspricht.

## Claims

1. A process for preparing ethylene homopolymers and ethylene copolymers in a tubular reactor at pressures above 1000 bar and at from 120 to 350°C by free-radical polymerization, by first feeding small amounts of free-radical-chain initiator to a stream of flow medium comprising ethylene, molecular-weight regulator and, if desired, polyethylene, whereupon the polymerization takes place, which comprises first breaking down the stream of flow medium into two volume elements separate from one another, then using suitable flow elements to cause the substreams separated from one another to counter-rotate, then recombining the counter-rotating substreams to give one stream of flow medium and then, at the moment at which the counter-rotating substreams are combined, or shortly thereafter, feeding the free-radical-chain initiator into the sheared interface between the counter-rotating substreams.

2. A process as claimed in claim 1, wherein the stream of flow medium is broken down to give a core stream and a peripheral stream.

3. A process as claimed in claim 1 or 2, wherein the molecular-weight regulator used comprises polar or nonpolar organic compounds, such as ketones, aldehydes, alkanes or alkenes having from 3 to 20 carbon atoms, preferably acetone, methyl ethyl ketone, propionaldehyde, propane, propene, butane, butene or hexene.

4. A process as claimed in any one of claims 1 to 3, wherein the free-radical-chain initiators fed comprise per metric ton of PE produced, from 10 to 1000 g, preferably from 100 to 600 g, of peroxides, such as tert-butyl peroxypivalate (TBPP), tert-butyl peroxy-3,5,5-trimethylhexanoate (TBPIN), di-tert-butyl peroxide (DTBP) or mixtures or solutions of these in suitable solvents.

5. A process as claimed in any one of claims 1 to 4, wherein the stream of flow medium to which the free-radical-chain initiators are fed comprises, besides ethylene and based on the amount of ethylene monomer, from 0 to 10% by weight, preferably from 1 to 5% by weight, of 1-olefin comonomers having from 3 to 20 carbon atoms, preferably having from 4 to 10 carbon atoms.

6. A process as claimed in any one of claims 1 to 5, wherein the stream of flow medium also comprises, based on the total weight of the monomers, from 0 to 40% by weight, preferably from 0 to 30% by weight, of polyethylene.

7. A process as claimed in any one of claims 1 to 6, wherein the free-radical-chain initiator is fed in a region of the tubular reactor in which the diameter of the tubular reactor reduces to a value approximately from 0.6 to 0.9 times the reactor diameter D in the inlet zone, so that the flow rate of the stream of flow medium increases to 1.2 to 2.8 times, preferably 1.8 to 2.5 times, the flow rate within the inlet zone of the tubular reactor.

8. An apparatus for carrying out a process as claimed in any one of claims 1 to 7, comprising a tubular reactor section with an internal diameter D and a length of from 30 to 50 D, preferably from 35 to 45 D, and one or more feed nozzles for the free-radical-chain initiator, wherein in the space within the tubular reactor, over a length of from 2 to 6 D, separators have been arranged to separate the stream of flow medium into substreams separate from one another, and wherein additionally at least one flow element has been arranged in the region of the separators and causes a stream of flow medium flowing past it to rotate, and wherein one or more feed nozzles for the free-radical-chain initiator have been arranged downstream of the separators and of the flow elements.

9. An apparatus as claimed in claim 8, wherein the separator for separating the stream of flow medium is an inner tube with a diameter of from 0.5 to 0.7 D, which separates the stream of flow medium into a core stream inside the inner tube and into a peripheral stream outside the inner tube but within the tubular reactor.

10. An apparatus as claimed in claim 8 or 9, wherein flow elements have been arranged within the inner tube and outside the inner tube and have the shape of plates which, seen longitudinally, turn by an angle of ± α, and the plates within the inner tube turn in a sense opposite to that of the plates outside the inner tube.

11. Apparatus as claimed in any one of claims 8 to 10, wherein the maximum length of the flow elements is the length of the inner tube and wherein the angle α by which the plates turn is at least 90°.

12. An apparatus as claimed in any one of claims 8 to 11, wherein the feed nozzles of which at least one, but preferably more than one, has/have been arranged at the downstream end of the inner tube has/have discharge orifices measuring not more than 1 mm, preferably not more 0.7 mm, particularly preferably not more than 0.5 mm.

13. An apparatus as claimed in any one of claims 8 to 12, wherein upstream of the separators for separating the stream of flow medium into volume elements flowing separately from one another or downstream of the feed nozzle(s) a conical transition piece has been arranged, in the region of which the internal diameter of the tubular reactor is reduced from D to about 0.9 to 0.6 D, and wherein the conical transition piece has been arranged at a distance of not more than 1 D, preferably not more than 0.5 D, from the separators or the feed nozzle(s) and has a length of from 3 to 7 D, preferably from 4 to 6 D.

14. An apparatus as claimed in any one of claims 8 to 13, wherein the reaction tube has been arranged downstream of the conical transition piece and has a length of from 15 to 30 D, preferably from 20 to 27 D and an internal diameter which is the internal diameter of the conical end section of the conical transition piece.

## Revendications

1. Procédé de préparation d'homopolymères et de copolymères d'éthylène par polymérisation radicalaire dans un réacteur tubulaire sous des pressions supérieures à 1 000 bar et à des températures comprises entre 120 et 350°C, dans lequel on introduit d'abord de petites quantités d'amorceurs de chaînes radicalaires dans un courant rapide d'un milieu fluide contenant de l'éthylène, des agents de réglage de la masse molaire et éventuellement du polyéthylène, après quoi s'effectue la polymérisation, **caractérisé en ce que** l'on divise d'abord le courant rapide de milieu fluide en deux courants rapides d'éléments de volume séparés l'un de l'autre, **en ce que** l'on fait ensuite tourner en sens inverse, par des éléments de courant appropriés, les courants rapides d'éléments de volume séparés l'un de l'autre, **en ce que** l'on réunit ensuite de nouveau les courants rapides d'éléments de volume tournant en sens inverse pour former un courant rapide de milieu fluide et **en ce que**, au moment de la réunion des courants rapides d'éléments de volume tournant en sens inverse ou peu après, on introduit l'amorceur de chaînes radicalaires dans la zone limite de cisaillage entre les courants rapides d'éléments de volume tournant en sens inverse.

2. Procédé selon la revendication 1, **caractérisé en ce que** l'on effectue la division du courant rapide de milieu fluide de façon qu'il se forme un courant central et un courant latéral.

3. Procédé selon la revendication 1 ou 2, **caractérisé en ce que** l'on utilise comme agents de réglage de la masse molaire des composés organiques polaires ou non polaires comme des cétones, des aldéhydes, des alcanes ou des alcènes de 3 à 20 atomes de carbone, de préférence l'acétone, la méthyléthylcétone, le propionaldéhyde, le propane, le propène, le butane, le butène ou l'hexène.

4. Procédé selon l'une des revendications 1 à 3, **caractérisé en ce que** l'on introduit comme amorceurs de chaînes radicalaires des peroxydes comme le peroxypivalate de tert-butyle (TBPP), le peroxy-3,5,5-triméthylhexanoate de tert-butyle (TBPIN), le peroxyde de di-tert-butyle ou leurs mélanges, ou leurs solutions dans des solvants appropriés, en des quantités comprises entre 10 et 1 000 g/t de PE produit, de préférence de 100 à 600 g/t de PE.

5. Procédé selon l'une des revendications 1 à 4, **caractérisé en ce que** le courant rapide de milieu fluide dans lequel on introduit les amorceurs de chaînes radicalaires contient comme comonomères, en plus de l'éthylène, des 1-oléfines de 3 à 20 atomes de carbone, de préférence de 4 à 10 atomes de carbone, en une quantité comprise entre 0 et 10 % en masse par rapport à la quantité de monomère éthylène, de préférence en une quantité comprise entre 1 et 5 % en masse.

6. Procédé selon l'une des revendications 1 à 5, **caractérisé en ce que** le courant rapide de milieu fluide contient en outre du polyéthylène en une quantité comprise entre 0 et 40 % en masse par rapport à la masse totale des monomères, de préférence en une quantité de 0 à 30 % en masse.

7. Procédé selon l'une des revendications 1 à 6, **caractérisé en ce que** l'on effectue l'introduction des amorceurs de chaînes radicalaires dans une zone du réacteur tubulaire dans laquelle une réduction du diamètre du réacteur tubulaire à une valeur d'environ 0,6 à 0,9 fois le diamètre D du réacteur dans la zone d'alimentation entraîne une augmentation de 1,2 à 2,8 fois, de préférence à 1,8 à 2,5 fois, de la vitesse du courant dans la zone d'alimentation du réacteur tubulaire.

8. Dispositif pour la mise en oeuvre du procédé selon l'une des revendications 1 à 7, comprenant un élément de réacteur tubulaire ayant un diamètre interne D et une longueur comprise entre 30 et 50 · D, de préférence entre 35 et 45 · D, et une ou plusieurs buses d'introduction pour l'amorceur de chaînes radicalaires, **caractérisé en ce que**, dans l'espace interne du réacteur tubulaire, des éléments de séparation pour la séparation du courant rapide de milieu fluide en deux courants d'éléments de volume séparés l'un de l'autre sont disposés sur une longueur comprise entre 2 et 6 · D, **en ce qu'**au moins un élément de courant qui fait tourner le courant de milieu fluide circulant le long de cet élément est disposé en outre dans la zone des éléments de séparation, et **en ce qu'**une ou plusieurs buses d'introduction pour l'amorceur de chaînes radicalaires sont disposées derrière les éléments de séparation et les éléments de courant, dans le sens de l'écoulement.

9. Dispositif selon la revendication 8, **caractérisé en ce que** l'élément de séparation pour la séparation du courant de milieu fluide est un tube interne ayant un diamètre compris entre 0,5 et 0,7 · D, grâce auquel le courant de milieu fluide est séparé en un courant central à l'intérieur du tube interne et en un courant latéral à l'extérieur du tube interne, mais à l'intérieur du réacteur tubulaire.

10. Dispositif selon la revendication 8 ou 9, **caractérisé en ce que**, à l'intérieur du tube interne et à l'extérieur du tube interne, sont disposés des éléments de courant qui représentent dans leur configuration géométrique longitudinale des plaques présentant une torsion d'un angle ± α, la torsion des éléments de courant étant en sens inverse à l'intérieur du tube interne et à l'extérieur du tube interne.

11. Dispositif selon l'une des revendications 8 à 10, **caractérisé en ce que** la longueur maximale des éléments de courant correspond à la longueur du tube interne, et **en ce que** l'angle α de torsion des plaques est d'au moins 90°.

12. Dispositif selon l'une des revendications 8 à 11, **caractérisé en ce que** les buses d'introduction, dont au moins une, mais de préférence plusieurs, sont disposées à l'extrémité du tube interne dans le sens du courant, ont des orifices de sortie d'au plus 1 mm, de préférence d'au plus 0,7 mm, de façon particulièrement préférée d'au plus 0,5 mm.

13. Dispositif selon l'une des revendications 8 à 12, **caractérisé en ce que**, dans le sens du courant, avant les éléments de séparation destinés à la séparation du courant de milieu liquide en des courants d'éléments de volume séparés l'un de l'autre, ou après la ou les buses d'introduction, est disposé un élément de jonction conique dans la région duquel le diamètre interne du réacteur tubulaire est réduit de D à environ 0,9 à 0,6 · D, et **en ce que** l'élément de jonction conique est disposé à une distance d'au plus 1 · D, de préférence d'au plus 0,5 · D, des éléments de séparation ou de la ou des buses d'introduction, et a une longueur comprise entre 3 et 7 · D, de préférence comprise entre 4 et 6 · D.

14. Dispositif selon l'une des revendications 8 à 13, **caractérisé en ce que**, après l'élément de jonction conique, dans le sens du courant, est disposé le tube de réaction ayant une longueur comprise entre 15 et 30 · D, de préférence entre 20 et 27 · D, et ayant un diamètre interne correspondant au diamètre interne de la partie terminale conique de l'élément de jonction conique.
